# EUROPÄISCHE PATENTANMELDUNG

(11) **EP 2 253 401 A1**
(43) Veröffentlichungstag der Anmeldung: **24.11.2010**
(21) Anmeldenummer: 10161104.4
(22) Anmeldetag: 27.04.2010
(51) Int. Cl.: B23B 51/02

(54) **Bohrer**

(30) Priorität: 20.05.2009 DE 102009003287
(71) Anmelder: HILTI Aktiengesellschaft, 9494 Schaan (LI)
(72) Erfinder: Foser, Roland, 9494, Schaan (LI); Moseley, Steven, 6820 Gurtis-Neuring (AT); Domani, Günther, 6820, Frastanz (AT); Allaart, Jan, 9492, Eschen (LI)

(57) **Zusammenfassung**

Ein Bohrer beinhaltet eine Bohrkopf aus Hartmetall und einen Schaft aus Stahl, auf dem der Bohrkopf materialschlüssig befestigt ist. Eine Unterseite der Bohrkopf ist durch mehrere Vertiefungen und/oder Erhebungen aufgeraut, deren Höhe höchstens 15 Prozent, vorzugsweise höchstens 10 Prozent einer Höhe des Bohrkopfs beträgt.

## Beschreibung

### GEBIET DER ERFINDUNG

Die vorliegende Erfindung betrifft einen Bohrer mit einem Vollkopf, die insbesondere für einen dreh-meisselnden Betrieb geeignet sind.

Bohrer für das Baugewerbe werden mit Schneiden aus Hartmetall gefertigt. Das Hartmetall, typischerweise ein gesintertes Wolframcarbid, ist ausreichend hart, um Gestein und auch Stahlarmierungen zu trennen. Bei einem Vollkopfbohrer ist der gesamte Bohrkopf aus dem Hartmetall gefertigt. Der Bohrkopf wird an einer Fügezone mit einer Wendel verbunden. Die Fügezone stellt eine Schwachstelle bei der Übertragung von Kräften von der Wendel auf den Bohrkopf und auch von dem Bohrkopf auf die Wendel dar. Insbesondere können die Bohrköpfe von der Wendel abgeschert oder abgedreht werden, wenn beim Bohren der Bohrkopf sich an einer Armierung festklemmt.

Eine zusätzliche Schwächung der Bohrer kann durch thermomechanische Spannungen beim Auflöten oder Aufschweißen des Vollkopfs auf die Wendel entstehen.

### OFFENBARUNG DER ERFINDUNG

Eine Aufgabe besteht in einer stabileren Befestigung des Vollkopfs an einem Schaft eines Bohrers.

Gemäß einem Aspekt der Erfindung beinhaltet ein Bohrer einen Bohrkopf aus Hartmetall und einen Schaft aus Stahl, auf dem der Bohrkopf materialschlüssig befestigt ist. Eine Unterseite der Bohrkopf ist durch mehrere Vertiefungen und/oder Erhebungen aufgeraut, deren Höhe höchstens 15 Prozent, vorzugsweise höchstens 10 Prozent einer Höhe des Bohrkopfs beträgt.

Die Vertiefungen / Erhebungen unterbrechen das ansonsten ebene Gefüge des Vollkopfs mit dem Schaft. Eine Rissfortpflanzung konnte hierdurch effektiv unterdrückt werden, weil ein Riss, so wird vermutet, entweder in einer Ebene durch verschiedenes Material oder innerhalb eines Materials in verschiedenen Kristallebenen verlaufen muss. Ab einer Höhe von 15 Prozent ergab sich kein verbessertes Verhalten gegenüber in Hinblick auf eine Rissfortpflanzung. Der Aufwand einer Herstellung einer mechanisch stabilen Unterseite des Bohrkopfs aus dem Hartmetall mit den vielfachen Erhebungen und/oder Vertiefungen nimmt mit der Höhe der Erhebungen und Vertiefungen signifikant zu. Eine Höhe im Bereich von 5 Prozent bis 10 Prozent wird aufgrund einer guten Rissunterdrückung und mechanisch stabilen Unterseite bevorzugt. Die Erhebungen und Vertiefungen sind vorzugsweise größer als typische Oberflächenrauhigkeiten im Bereich von weniger als 0,05 mm.

Eine Ausgestaltung sieht vor, dass die Unterseite mit dem Schaft materialschlüssig verbunden ist. Der Materialschluss kann durch unmittelbares Aufschweißen des Schafts auf den Bohrkopf erfolgen. Alternativ wird eine dünne Folie aus einem Hilfsmaterial oder ein Lotmaterial zum Anbinden verwendet.

Eine Ausgestaltung sieht vor, dass ein Verhältnis einer Breite der Vertiefungen und/oder Erhebungen zu deren Höhe größer als 0,5, vorzugsweise 0,75 und/oder geringer als 4, vorzugsweise 3 ist. Vertiefungen mit einer deutlich geringeren Breite als Höhe sind ein geringes Hindernis für einen Riss. Die Erhebungen reißen im Wesentlich einfach ab. Überschreitet die Breite eine gewisse Größe kann sich der Riss ungehindert entlang einer unverspannten Kristallebene in der Vertiefung oder der Erhebung fortpflanzen. Ein Krümmungsradius der Oberflächen der Vertiefungen und/oder Erhebungen sollte in jeder Richtung größer als 0,1 mm sein. Kanten oder Spitzen neigen dazu durch bei einer Rissinitiierung einfach abzureißen. Sie stellen daher keine effektive Barriere dar. Pyramidenförmige Vertiefungen und Erhebungen sind vorzugsweise an den Kanten und der Spitze abgerundet.

Eine Ausgestaltung sieht vor, dass die Vertiefungen und/oder Erhebungen entlang einer ringförmigen Linie angeordnet sind, welche zentriert zu der Längsachse des Bohrers verläuft. Die Vertiefungen und/oder Erhebungen können entlang mehrerer konzentrisch zueinander angeordneter, ringförmiger Linien angeordnet sein. Eine ringförmige Linie beschreibt eine in sich geschlossene Linie, deren Form kann kreisförmig oder elliptisch sein, ist jedoch nicht auf diese beiden Formen beschränkt. Die Vertiefungen und/oder Erhebungen können selbst ringförmig ausgebildet sein oder entlang der Linie durchbrochen sein. Eine durchbrochene Vertiefung setzt sich somit aus mehreren einzelnen Vertiefungen zusammen, die entlang der ringförmigen Linie ausgerichtet sind. Die ringförmige Linie kann einen radialen Abstand von einem Rand des Bohrkopfs zu einer Achse des Bohrers in einem konstanten Verhältnis teilen.

Eine Ausgestaltung sieht vor, dass die Vertiefungen und/oder Erhebungen auf Gitterpunkten angeordnet sind. Die Gitterpunkte sind die Kreuzungspunkte der Gitterlinien. Das Gitter wird durch zu zwei Richtungen jeweils parallel laufende Gitterlinien definiert. Der Bohrkopf kann zwei Schneidkanten aufweisen und die ersten Gitterlinien parallel zu der ersten Schneidkante und die zweiten Gitterlinien parallel zu der zweiten Schneidkante verlaufen. Die Vertiefungen und/oder Erhebungen können entlang der Gitterlinien unterbrochen sein.

Eine Ausgestaltung sieht vor, dass die Unterseite kegelförmig ist. Eine Neigung der Unterseite kann um weniger als 20 Grad von einer Neigung einer Schneidkante des Bohrkopfs abweichen. Die mittlere Neigung kann als Tangente von der Spitze zu dem Rand bestimmt werden. Eine Materialstärke kann vorzugsweise über einen großen Bereich der Bohrkopf, insbesondere in der Ebene der Schneidkanten, konstant ausgebildet werden. Hierdurch kann ein Bohrkopf mit einer hohen inneren Festigkeit und Stabilität hergestellt werden.

Eine Ausgestaltung sieht vor, dass eine dem Bohrkopf zugewandte Fläche des Schafts eine konvexe Wölbung aufweist. Die konvexe Wölbung kann den gesamten Querschnitt des Schafts einnehmen.

Der Bohrer kann einen Schaft mit einer Wendel aufweisen.

### KURZE BESCHREIBUNG DER FIGUREN

Die nachfolgende Beschreibung erläutert die Erfindung anhand von exemplarischen Ausführungsformen und Figuren. In den Figuren zeigen:
Fig. 1 einen Bohrer;
Fig. 2 einen Querschnitt durch einen Bohrkopf;
Fig. 3 einen Unteransicht des Bohrkopfs von Fig. 1;
Fig. 4 eine Unteransicht eines weiteren Bohrkopfs;
Fig. 5 eine Unteransicht eines weiteren Bohrkopfs.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

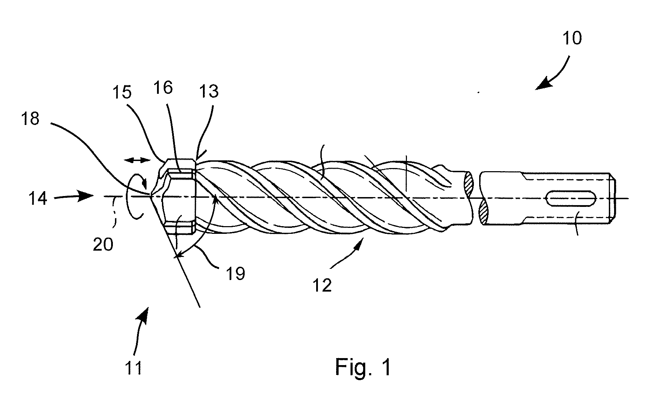

Fig. 1 zeigt ein Beispiel eines Bohrers 10. Der Bohrer 10 beinhaltet einen Bohrkopf 11 und einen Schaft 12. Der Schaft 12 ist in der Form einer Wendel ausgebildet. Der Bohrkopf 11 ist mit dem Schaft 12 an einer Fügezone 13 verbunden.

Der Bohrkopf 11 besteht aus einem Hartmetall. Das Hartmetall kann z.B. aus der Klasse gesinterter Wolframcarbide sein. Das Wolframcarbid liegt als Körner mit beispielsweise einem Durchmesser im Bereich von 0,8 bis 10 µm vor. Ein Bindermaterial, z.B. Kobalt, Nickel, ist z.B. in einem Anteil von weniger 20 % zugemischt.

An einer Vorderseite 14 weist der Bohrkopf 11 Schneidkanten 15, 16 auf. Vorzugsweise weist der Bohrkopf 11 eine erste Schneidkante 15 und eine zweite Schneidkante 16 auf, welche in einem Winkel 17 zueinander geneigt sind. Der Winkel 17 kann im Bereich von 60 Grad bis 90 Grad liegen. Die Schneidkanten 15, 16 können zu einer Spitze 18 zulaufen. Eine mittlere Neigung 19 der Schneidkanten 15, 16 zu einer Achse 20 des Bohrkopfs 11 liegt beispielsweise im Bereich von 70 Grad bis 90 Grad. Die mittlere Steigung 19 kann durch eine an die Spitze 18 und den Rand angelegte Gerade bestimmt werden.

Der Schaft 12 kann aus Stahl sein.

Der Bohrkopf 11 und der Schaft 12 werden zunächst getrennt hergestellt und nachträglich miteinander verbunden. Bei dem Herstellungsverfahren des Bohrkopfs 11 wird zunächst ein Grünling aus Körnern und dem Bindermaterial in eine Vorform gepresst, danach wird der Grünling gesintert. Der Schaft 12 kann beispielsweise in einem spanenden Verfahren oder durch Walzen hergestellt werden.

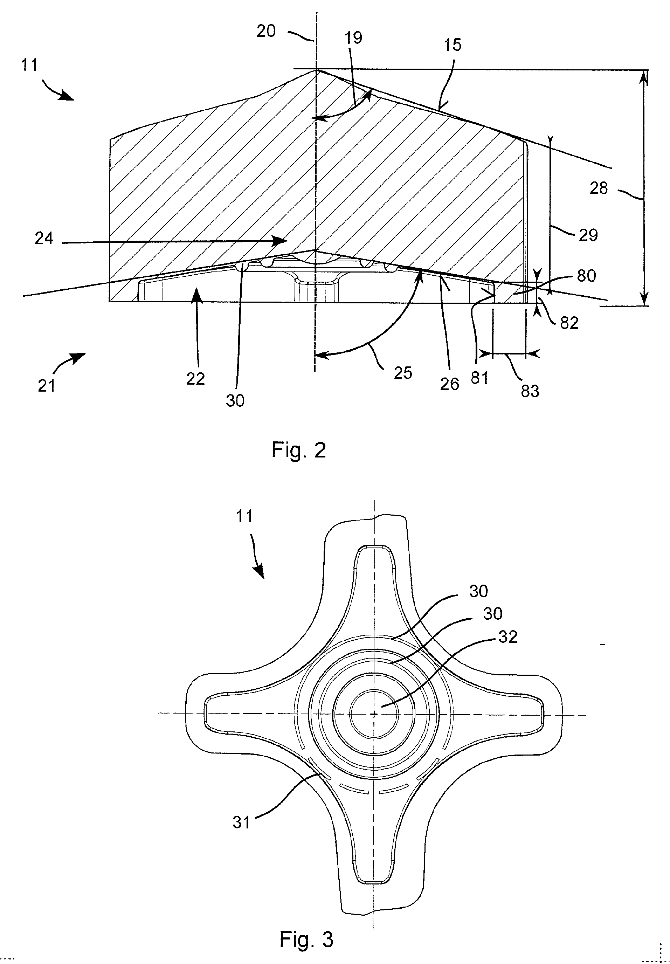

Fig. 2 und Fig. 3 zeigen eine Ausführung eines Bohrkopfs 11 in einem Schnitt längs der Achse 20 der Bohrkopf 11 und in einer Ansicht auf eine Unterseite 21 des Bohrkopfs 11.

In die Unterseite 21 des Bohrkopfs 11 kann eine Vertiefung 22 eingebracht sein. Die Vertiefung 22 nimmt wenigstens 80 Prozent des gesamten Querschnitts des Bohrkopfs 11 ein. Die Vertiefung 22 kann zu der Achse 20 des Bohrkopfs 11 konisch zulaufend sein. Die kegelförmige Mantelfläche der Vertiefung 22 kann mit einem Winkel 25 im Bereich von 75 Grad bis 85 Grad gegenüber der Achse 20 geneigt sein. Eine Neigung 25 der vertieften Fläche 26 kann ähnlich einer mittleren Neigung 19 der Scheidkanten 15 gewählt sein. Eine Abweichung der Neigungen kann geringer als 25 Prozent sein, vorzugsweise geringer als 20 Grad. Eine Dicke oder Stärke 29 des Bohrkopfs 11, gemessen längs der Achse 20, ist vorzugsweise im Wesentlichen in jedem Abstand zu der Achse 20 gleich, vorzugsweise wenigstens im Bereich der Schneidkanten 15, 16. Eine Varianz der Dicke im Bereich der Schneidkanten 15, 16 ist geringer als 20 Prozent, vorzugsweise geringer als 10 Prozent der mittleren Dicke.

An der Unterseite 21 kann ein Saum 80 vorgesehen sein, der die Vertiefung 22 vorzugsweise vollständig umfasst. Der Saum 80 verläuft entlang der äußeren Kontur des Bohrkopfs 11. Der Saum 80 weist eine innere Kante 81 auf. Die innere Kante 81 kann parallel zu der Achse 20 verlaufen. Vorzugsweise verläuft die Kante 81 jedoch unter einer Neigung von 20 Grad bis 40 Grad zu der Achse 20. Eine Höhe 82 des Saums liegt etwa im Bereich von 10 Prozent bis 20 Prozent der gesamten Höhe des Bohrkopfs 11. Eine Breite des Saums 83 liegt etwa im Bereich von 5 Prozent bis 10 Prozent des Durchmessers des Bohrkopfs 11.

Auf der vertieften Fläche 26 sind ringförmige Erhebungen 30 ausgebildet. Die Erhebungen 30 sind konzentrisch um die Achse 20 der Bohrkopf 11 angeordnet. Die Erhebungen 30 und der Bohrkopf 11 sind vorzugsweise aus dem gleichen Material. Die Erhebungen 30 können in die Unterseite 21 vor dem Sintern des Grünlings eingeprägt werden.

Die Erhebungen 30 weisen vorzugsweise einen etwa halbkreisförmigen Querschnitt auf. Eine Höhe der Erhebungen 30 kann im Bereich zwischen 0,1 mm und 2 mm liegen. Die Höhe der Erhebungen 30 kann bis zu fünfzehn Prozent einer Höhe 28 des Bohrkopfs 11 betragen. Eine Breite der Erhebungen 30 liegt entsprechend vorzugsweise in einem Bereich von 0,2 mm bis 4,0 mm. Die Erhebungen 30 weisen vorzugsweise keine Kanten auf, ein Krümmungsradius der Erhebungen ist vorzugsweise in jeder Richtung größer als 0,1 mm. Auf der Achse 20 des Bohrkopfs 11 kann eine kuppelförmige Erhebung 32 angeordnet sein. Die kuppelförmige Erhebung 32 weist vorzugsweise eine ähnliche Höhe wie die Erhebungen 30 auf, d.h. im Bereich von 0,05 mm bis 0,5 mm. Ihr Durchmesser kann beispielsweise zwischen 2 mm und 4 mm liegen.

Die Erhebungen 31 können auch entlang der Kreislinie unterbrochen sein, wie beispielsweise in Fig. 3 angedeutet. Insbesondere kann eine Öffnung in entlang der Kreislinie in der Ebene von Schneidkante 15, 16 und Achse 20 vorgesehen sein.

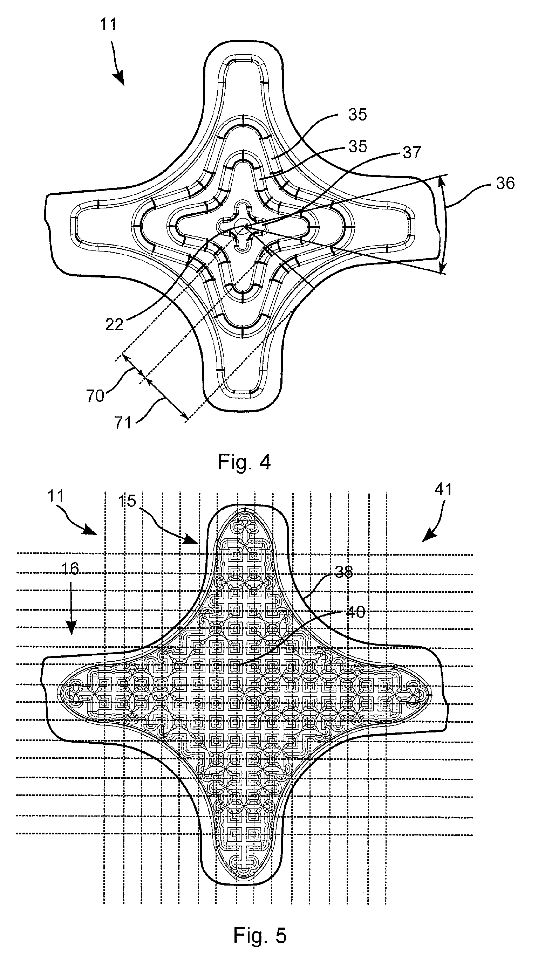

Fig. 4 zeigt eine Variante einer Unterseite 34 mit Erhebungen 35. Die Erhebungen 35 sind ringförmig. Eine Kontur der Erhebungen 35 folgt der sternförmigen Geometrie des Bohrkopfs 11. Ein radialer Abstand der Erhebungen 35 von der Achse 20 des Bohrkopfs 11 ist in Winkelbereichen 36 der Schneidkanten 15 größer als in anderen Bereichen. Der radiale Abstand von der Achse 20 zu dem Rand des Bohrkopfs 11 wird durch die Erhebung 35 in jeder Winkelrichtung in zwei Abschnitte 70, 71 geteilt, die ein festes Längenverhältnis zueinander aufweisen. Im Bereich der Achse 20 kann eine sternförmige Erhebung 37 angeordnet sein, deren Querschnitt beispielsweise die gleiche Form wie der Umfang des Bohrkopfs aufweist. Die Erhebung 35 kann entlang ihrer Linie mehrfach unterbrochen sein. Insbesondere kann die Erhebung 35 in entlang von Achsen parallel zu den Schneidkanten 15, 16 unterbrochen sein.
Fig. 5 zeigt eine Variante einer Unterseite 38 mit einer Vielzahl von Erhebungen 40. Die Erhebungen sind auf Kreuzungspunkten eines Gitters 41 angeordnet. Die Linien des Gitters 41 sind vorzugsweise parallel zu der ersten Schneidkante 15 bzw. parallel zu der zweiten Schneidkante 16 des Bohrkopfs. In dem dargestellten Ausführungsbeispiel sind die erste Schneidkante 15 und die zweite Schneidkante 16 senkrecht zueinander. Bei anderen Geometrien des Bohrkopfs 11 verlaufen die Schneidkanten unter Winkeln im Bereich von 60 Grad bis 90 Grad.

Die Erhebungen 40 sind in beide Richtungen des Gitters 41 begrenzt. Entlang der größten Abmessungen, d.h. in der Ebene der Schneidkanten 15, 16, sind wenigstens zehn diskrete Erhebungen 40 angeordnet. Innere thermomechanische Spannungen nach dem Schweißprozess können durch die Erhebungen 40 verringert werden. Hierbei zeigte sich, dass eine große Anzahl von Erhebungen 40 sich günstiger als eine geringe Anzahl und dafür größerer Erhebungen auswirkt. Ein in den Bereich geringer Spannungen eindringender Riss muss eine größere Arbeit leisten, um die Fügezone zu durchdringen.

Die Erhebungen 40 können anstelle auf einem Gitter 41 auch entlang radial verlaufender Linien auf der Unterseite des Bohrkopfes 11 angeordnet sein. Die Erhebungen 40 können entlang der radialen Linien mehrfach unterbrochen sein oder sich über die gesamte Länge erstrecken.

Anstelle sich von der Unterseite vorspringende Erhebungen vorzusehen, können auch in die Unterseite Vertiefungen eingesenkt werden.

## Patentansprüche

1. Bohrer (10), der einen Bohrkopf (15) aus Hartmetall und einen Schaft (12) aus Stahl beinhaltet, wobei der Bohrkopf (15) mit seiner Unterseite (21) auf dem Schaft (12) materialschlüssig befestigt ist, **dadurch gekennzeichnet, dass** die Unterseite (21) mit Vertiefungen und/oder Erhebungen (30) versehen ist, deren Höhe höchstens fünfzehn Prozent einer Höhe (28) des Bohrkopfs (15) beträgt.

2. Bohrer nach Anspruch 1, **dadurch gekennzeichnet, dass** der Bohrkopf (15) auf dem Schaft (12) stoffschlüssig gefügt ist.

3. Bohrer nach Anspruch 1 oder 2, **dadurch gekennzeichnet, dass** ein Verhältnis einer Breite der Vertiefungen und/oder Erhebungen (30) zu deren Höhe zwischen 0,5 und vier liegt.

4. Bohrer nach einem der vorhergehenden Ansprüche, **dadurch gekennzeichnet, dass** ein Krümmungsradius der Oberflächen der Vertiefungen und/oder Erhebungen (30) in jeder Richtung größer als 0,1 mm ist.

5. Bohrer nach einem der vorhergehenden Ansprüche, **dadurch gekennzeichnet, dass** die Vertiefungen und/oder Erhebungen (30) entlang einer ringförmigen Linie angeordnet sind, welche zentriert zu der Längsachse des Bohrers verläuft.

6. Bohrer nach Anspruch 5, **dadurch gekennzeichnet, dass** die Vertiefungen und/oder Erhebungen (30) entlang mehrerer konzentrisch zueinander angeordneter, ringförmiger Linien angeordnet sind.

7. Bohrer nach einem der Ansprüche 5 oder 6, **dadurch gekennzeichnet, dass** die ringförmige Linie einen radialen Abstand von einem Rand des Bohrkopf (15)s zu einer Achse des Bohrers in einem konstanten Verhältnis teilt.

8. Bohrer nach einem der Ansprüche 1 bis 4, **dadurch gekennzeichnet, dass** die Vertiefungen und/oder Erhebungen (30) auf Gitterpunkten angeordnet sind.

9. Bohrer nach Anspruch 8, **dadurch gekennzeichnet, dass** Vertiefungen und/oder Erhebungen (30) entlang der Gitterlinien unterbrochen sind.

10. Bohrer nach Anspruch 8 oder 9, **dadurch gekennzeichnet, dass** der Bohrkopf (15) zwei Schneidkanten aufweist und die ersten Gitterlinien parallel zu der ersten Schneidkante und die zweiten Gitterlinien parallel zu der zweiten Schneidkante verlaufen.

11. Bohrer nach einem der Ansprüche 1 bis 4, **dadurch gekennzeichnet, dass** die Erhebungen (30) und/oder Vertiefungen entlang von zur Achse der Bohrkrone radial verlaufenden Linien angeordnet sind.

12. Bohrer nach einem der vorhergehenden Ansprüche, **dadurch gekennzeichnet, dass** die Unterseite (21) kegelförmig ist.

13. Bohrer nach Anspruch 12, **dadurch gekennzeichnet, dass** eine Neigung der Unterseite (21) um weniger als 20 Grad von einer Neigung einer Schneidkante des Bohrkopfs (15) abweicht.

14. Bohrer nach einem der vorhergehenden Ansprüche, **dadurch gekennzeichnet, dass** eine dem Bohrkopf (15) zugewandte Fläche des Schafts (12) eine konvexe Wölbung aufweist.

15. Bohrer nach einem der vorhergehenden Ansprüche, dass die konvexe Wölbung wenigstens 80 Prozent des gesamten Querschnitts des Schafts (12) einnimmt.
